# EUROPEAN PATENT SPECIFICATION

(11) **EP 1 729 461 B1**
(45) Date of publication and mention of the grant of the patent: **21.07.2010**
(21) Application number: 06004758.6
(22) Date of filing: 08.03.2006
(51) Int. Cl.: H04L 12/56

(54) **Dynamic port failover**
Dynamische Portausfallsicherung
Basculement de port dynamique

(30) Priority: 02.06.2005 US 686399 P; 12.01.2006 US 330187
(43) Date of publication of application: 06.12.2006
(73) Proprietor: Broadcom Corporation, Irvine, CA 92617 (US)
(72) Inventor: Agarwal, Puneet, 95014 Cupertino, CA (US); Wang, Zheng, San Mateo, CA (US)
(74) Representative: Jehle, Volker Armin

(56) References cited:
- EP-A- 1 246 410
- US-A1- 2003 131 131

## Description

### BACKGROUND OF THE INVENTION

### Field of the Invention

The present invention relates to a network device in a data network and more particularly to a system and method of implementing a port failover mechanism in the network device.

### Description of the Related Art

A packet switched network may include one or more network devices, such as a Ethernet switching chip, each of which includes several modules that are used to process information that is transmitted through the device. Specifically, the device includes an ingress module, a Memory Management Unit (MMU) and an egress module. The ingress module includes switching functionality for determining to which destination port a packet should be directed. The MMU is used for storing packet information and performing resource checks. The egress module is used for performing packet modification and for transmitting the packet to at least one appropriate destination port. One of the ports on the device may be a CPU port that enables the device to send and receive information to and from external switching/routing control entities or CPUs.

A current network device supports physical ports and logical/trunk ports, wherein the trunk ports are a set of physical external ports that act as a single link layer port. Ingress and destination ports on the network device may be physical external ports or trunk ports. By logically combining multiple physical ports into a trunk port, the network may provide greater bandwidth for connecting multiple devices. Furthermore, if one port in the trunk fails, information may still be sent between connected devices through other active ports of the trunk. As such, trunk ports also enable the network to provide greater redundancy between connected network devices.

Typically, each packet entering a network device may be one of a unicast packet, a broadcast packet, a muliticast packet, or an unknown unicast packet. The unicast packet is transmitted to a specific destination address that can be determined by the receiving network device. However, the sending network device must select one port from the trunk group and adequately distribute packets across ports of the trunk group. The broadcast packet is typically sent to all ports by the ingress network device and the multicast packet is sent to multiple identifiable ports by the ingress network device. To multicast or broadcast a packets specific bits in the packet are set prior to transmission of the packet to the ingress network device. An unknown unicast packet is a unicast packet in which the ingress network device cannot determine the associated destination address. So the ingress network device broadcasts the packet which is ignored by all ports except the intended but previously unknown destination port. When the previously unknown destination port sends a response message to the ingress network device, all network devices "learn" the associated destination address. Thereafter, any unicast packet sent to the previously unknown port is transmitted as a traditional unicast packet.

The network may include multiple devices that are connected to each other and to other network devices. For example, the network may include a first device that is connected to a second device via a high speed link. The first device may also be connected to a first switch via a first trunk with two links. The second device may be connected to the first switch via one link in a second trunk and connected to a second switch via another link in the second trunk.

In order to transmit information from one network device to another, a sending/ingress device has to determine if the destination port is a trunk port. If the destination port is a trunk port, the sending network device must dynamically select a physical external member port in the trunk on which to transmit the packet. The dynamic selection must account for load sharing between member ports in the trunk so that outgoing packets are distributed across the trunk. As such, in normal conditions, traffic is split between trunk group members based on hashing. When one member of a trunk group fails, all traffic to the failed member must be diverted on the remaining member(s). Since a trunk group may connect a network device to multiple devices, the destination port and the failover port may be on different devices. Currently, trunk failover may be achieved by removing the failed member from a trunk membership table. However, this requires CPU inventions and is slow. Hence hardware support is required in order to achieve rapid failover. An example of network device for selecting a failover port from a trunk group can be found in for example US 2003/131131 A1.
According to an aspect of the invention, a network device for selecting a failover port from a trunk group is provided, the network device comprising:
at least one trunk group comprising a plurality of physical ports, wherein the network device is connected to at least one other network device by at least one of the plurality of physical ports;
a medium component associated with one port of the plurality of physical ports for setting the port to a predefined mode when there is a failure at the port, for changing a state associated with the port after a failure at the port and for forwarding an incoming packet to the associated failed port to an ingress module;
retrieving means for retrieving a set of backup ports from a table;
hashing means for selecting one backup port from the set of backup ports; and
processing means for mirroring the incoming packet, for marking a mirrored copy of the packet and for redirecting a marked mirrored packet to the selected backup port,
wherein the medium componant is adapted to forward an incoming packet to the associated failed port to an ingress module,
wherein the redirected packet is marked as redirected to indicate that the packet has already been redirected and should not be further redirected.
Advantageously, the hashing means comprises a load balancing means for distributing incoming packets across the set of backup ports, wherein the set of backup ports comprise other ports in the trunk group.
Advantageously, the table comprises a plurality of entries, wherein each entry is associated with one trunk group and comprises a plurality of fields that are associated with ports in the trunk group, wherein each entry comprises a hash field that is used to select bits from predefmed fields of the incoming packet to obtain an index bit for accessing one of the plurality of fields and a select field for selecting predefined bits from the hash value.
Advantageously, software associated with the network device comprises configuring means for dynamically configuring the plurality of fields.
Advantageously, the ingress module comprises an ingress pipeline that is configured to operate in a failover mode, wherein the packet from the associated failed port is mirrored and marked and the mirrored copy is sent to the backup port.
Advantageously, the ingress module comprises means for dropping a switched copy of the packet in the ingress pipeline.
Advantageously, the network device further comprises setting means for setting each of the plurality of ports to a disabled state, a forwarding state or a redirecting state, wherein when a port is in the disabled state no traffic is transmitted to and from the port, when the port is in the forwarding state, traffic is transmitted to and received from the port and when a primary link is a port is not functioning, the port is transitioned to the redirecting state.
Advantageously, the medium component comprises means for changing the port to the redirecting state, wherein traffic to the port is directed to the selected backup port.
Advantageously, the network device further comprises means for transitioning the port from the redirecting state to the forwarding state when the port becomes functional.
Advantageously, the network device further comprises means for putting all ports in the forwarding state after software initiation.
Advantageously, the network device further comprises means for setting a bit in the high speed header when the mirrored copy of the packet is marked.
Advantageously, the network device further comprises means for dropping an incoming marked mirrored copy of the packet when the port is in the redirected state.
According to an aspect of the invention, a method for selecting a failover port from a trunk group is provided, the method comprises the steps of:
connecting a network device to at least one other network device by at least one trunk group comprising a plurality of physical ports;
setting at least one port of the plurality of physical ports to a predefined mode when there is a failure at the port and changing a state associated with the port;
forwarding an incoming packet to the port to an ingress module;
retrieving a set of backup ports from a table;
selecting one backup port from the set of backup ports;
mirroring the incoming packet;
marking a mirrored copy of the packet as redirected to indicate that the packet has already been redirected and should not further be redirected; and
redirecting a marked mirrored packet to the selected backup port.
Advantageously, the method further comprises distributing incoming packets across the set of backup ports, wherein the set of backup ports comprise other port from the plurality of physical ports of the trunk group.
Advantageously, the method further comprises:
storing a plurality of entries in a table, wherein each entry is associated with one trunk group and comprises a plurality of fields that are associated with ports in the trunk group and each entry comprises a hash field;
selecting, with the hash field, bits from predefined fields of the incoming packet to obtain an index bit for accessing one of the plurality of fields; and
selecting, with a select field, predefined bits from the hash value.
Advantageously, the method further comprises dropping a switched copy of the mirrored packet.
Advantageously, the method further comprises setting each of the plurality of ports to a disabled state, a forwarding state or a redirecting state, wherein when a port is in the disabled state no traffic is transmitted to and from the port, when the port is in the forwarding state, traffic is transmitted to and received from the port.
Advantageously, the method further comprises transitioning the port to the redirecting state when a primary link is a port is not functioning.
Advantageously, the method further comprises transitioning the port from the redirecting state to the forwarding state when the port becomes functional.
Advantageously, the method further comprises putting all ports in the forwarding state after software initiation.
Advantageously, the method further comprises setting a bit in the high speed header when the mirrored copy of the packet is marked.
Advantageously, the method further comprises dropping an incoming marked mirrored copy of the packet when the port is in the redirected state.

### BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention, wherein:

The accompanying drawings, which are included to provide a further understanding of the invention and are incorporated in and constitute a part of this specification, illustrate embodiments of the invention that together with the description serve to explain the principles of the invention, wherein:

Fig. 1 illustrates a network device in which an embodiment of the present invention may be implemented;

Fig. 2 illustrates a centralized ingress pipeline architecture, according to one embodiment of the present invention;

Fig. 3 illustrates an embodiment of the network in which multiple network devices are connected by trunks;

Fig. 4 illustrates a trunk group table used in an embodiment of the invention;

Fig. 5 illustrates an embodiment of the network device in which the inventive failover mechanism is implemented; and

Fig. 6 illustrates a failover table used in an embodiment of the invention.

### DETAILED DESCRIPTION OF PREFERRED EMBODIMENTS

Reference will now be made to the preferred embodiments of the present invention, examples of which are illustrated in the accompanying drawings.

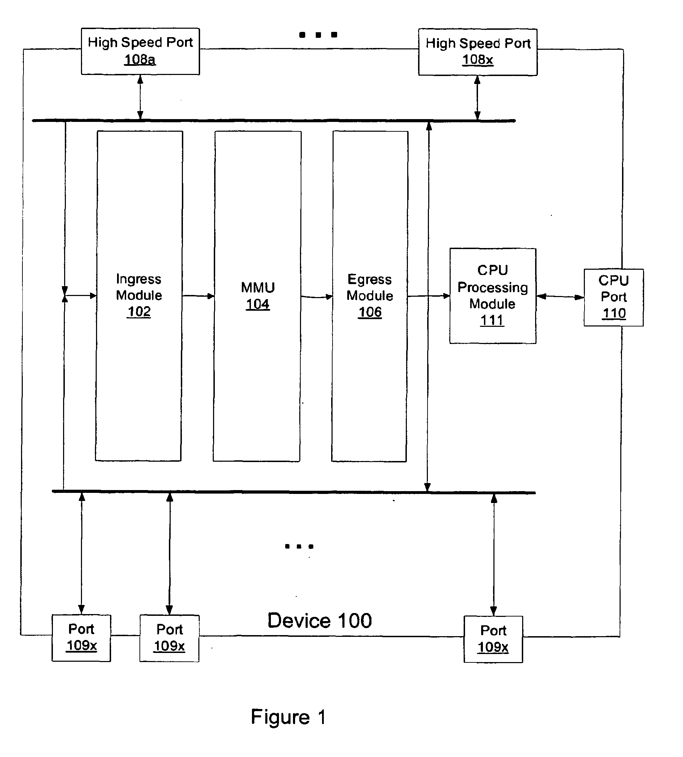

Fig. 1 illustrates a network device, such as a switching chip, in which an embodiment the present invention may be implemented. Device 100 includes an ingress module 102, a MMU 104, and an egress module 106. Ingress module 102 is used for performing switching functionality on an incoming packet. MMU 104 is used for storing packets and performing resource checks on each packet. Egress module 106 is used for performing packet modification and transmitting the packet to an appropriate destination port. Each of ingress module 102, MMU 104 and Egress module 106 includes multiple cycles for processing instructions generated by that module. Device 100 implements a pipelined approach to process incoming packets. The device 100 has the ability of the pipeline to process, according to one embodiment, one packet every clock cycle. According to one embodiment of the invention, the device 100 includes a 133.33MHz core clock. This means that the device 100 architecture is capable of processing 133.33M packets/sec.

Device 100 may also include one or more internal fabric high speed ports, for example a HiGig™, high speed port 108a-108x, one or more external Ethernet ports 109a-109x, and a CPU port 110. High speed ports 108a-108x are used to interconnect various network devices in a system and thus form an internal switching fabric for transporting packets between external source ports and one or more external destination ports. As such, high speed ports 108a-108x are not externally visible outside of a system that includes multiple interconnected network devices. CPU port 110 is used to send and receive packets to and from external switching/routing control entities or CPUs. According to an embodiment of the invention, CPU port 110 may be considered as one of external Ethernet ports 109a-109x. Device 100 interfaces with external/off-chip CPUs through a CPU processing module 111, such as a CMIC, which interfaces with a PCI bus that connects device 100 to an external CPU.

Network traffic enters and exits device 100 through external Ethernet ports 109a-109x. Specifically, traffic in device 100 is routed from an external Ethernet source port to one or more unique destination Ethernet ports 109a-109x. In one embodiment of the invention, device 100 supports physical Ethernet ports and logical (trunk) ports. A physical Ethernet port is a physical port on device 100 that is globally identified by a global port identifier. In an embodiment, the global port identifier includes a module identifier and a local port number that uniquely identifies device 100 and a specific physical port. The trunk ports are a set of physical external Ethernet ports that act as a single link layer port. Each trunk port is assigned a global a trunk group identifier (TGID). According to an embodiment, device 100 can support up to 128 trunk ports, with up to 8 members per trunk port, and up to 29 external physical ports. Destination ports 109a-109x on device 100 may be physical external Ethernet ports or trunk ports. If a destination port is a trunk port, device 100 dynamically selects a physical external Ethernet port in the trunk by using a hash to select a member port. As explained in more detail below, the dynamic selection enables device 100 to allow for dynamic load sharing between ports in a trunk.

Once a packet enters device 100 on a source port 109a-109x, the packet is transmitted to ingress module 102 for processing. Packets may enter device 100 from a XBOD or a GBOD. In an embodiment, the XBOD is a block that has one 10GE/12G MAC and supports packets from high speed ports 108a-108x. The GBOD is a block that has 12 10/100/1G MAC and supports packets from ports 109a-109x.

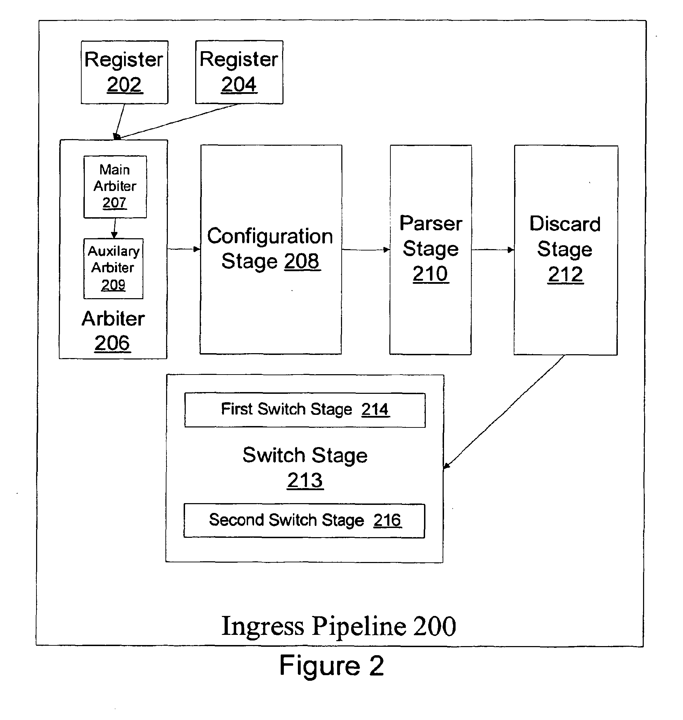

Figure 2 illustrates a centralized ingress pipeline architecture 200 of ingress module 102. Ingress pipeline 200 processes incoming packets, primarily determines an egress bitmap and, in some cases, figures out which parts of the packet may be modified. Ingress pipeline 200 includes a data holding register 202, a module header holding register 204, an arbiter 206, a configuration stage 208, a parser stage 210, a discard stage 212 and a switch stage 213. Ingress pipeline 200 receives data from the XBOD, GBOD or CPU processing module 111 and stores cell data in data holding register 202. Arbiter 206 is responsible for scheduling requests from the GBOD, the XBOD and CPU. Configuration stage 208 is used for setting up a table with all major port-specific fields that are required for switching. Parser stage 210 parses the incoming packet and a high speed module header, if present, handles tunnelled packets through Layer 3 (L3) tunnel table lookups, generates user defmed fields, verifies Internet Protocol version 4 (IPv4) checksum on outer IPv4 header, performs address checks and prepares relevant fields for downstream lookup processing. Discard stage 212 looks for various early discard conditions and either drops the packet and/or prevents it from being sent through pipeline 200. Switching stage 213 performs all switch processing in ingress pipeline 200, including address resolution.

According to one embodiment of the invention, the ingress pipeline includes one 1024-bit cell data holding register 202 and one 96-bit module header register 204 for each XBOD or GBOD. Data holding register 202 accumulates the incoming data into one contiguous 128-byte cell prior to arbitration and the module header register 204 stores an incoming 96-bit module header for use later in ingress pipeline 200. Specifically, holding register 202 stores incoming status information.

Ingress pipeline 200 schedules requests from the XBOD and GBOD every six clock cycles and sends a signal to each XBOD and GBOD to indicate when the requests from the XBOD and GBOD will be scheduled. CPU processing module 111 transfers one cell at a time to ingress module 102 and waits for an indication that ingress module 102 has used the cell before sending subsequent cells. Ingress pipeline 200 multiplexes signals from each of XBOD, GBOD and CPU processing based on which source is granted access to ingress pipeline 200 by arbiter 206. Upon receiving signals from the XBOD or GBOD, a source port is calculated by register buffer 202, the XBOD or GBOD connection is mapped to a particular physical port number on device 100 and register 202 passes information relating to a scheduled cell to arbiter 206.

When arbiter 206 receives information from register buffer 202, arbiter 206 may issue at least one of a packet operation code, an instruction operation code or a FP refresh code, depending on resource conflicts. According to one embodiment, the arbiter 206 includes a main arbiter 207 and auxiliary arbiter 209. The main arbiter 207 is a time-division multiplex (TDM) based arbiter that is responsible for scheduling requests from the GBOD and the XBOD, wherein requests from main arbiter 207 are given the highest priority. The auxiliary arbiter 209 schedules all non XBOD/GBOD requests, including CPU packet access requests, CPU memory/register read/write requests, learn operations, age operations, CPU table insert/delete requests, refresh requests and rate-limit counter refresh request. Auxiliary arbiter's 209 requests are scheduled based on available slots from main arbiter 207.

When the main arbiter 207 grants an XBOD or GBOD a slot, the cell data is pulled out of register 202 and sent, along with other information from register 202, down ingress pipeline 200. After scheduling the XBOD/GBOD cell, main arbiter 207 forwards certain status bits to auxiliary arbiter 209.

The auxiliary arbiter 209 is also responsible for performing all resource checks, in a specific cycle, to ensure that any operations that are issued simultaneously do not access the same resources. As such, auxiliary arbiter 209 is capable of scheduling a maximum of one instruction operation code or packet operation code per request cycle. According to one embodiment, auxiliary arbiter 209 implements resource check processing and a strict priority arbitration scheme. The resource check processing looks at all possible pending requests to determine which requests can be sent based on the resources that they use. The strict priority arbitration scheme implemented in an embodiment of the invention requires that CPU access request are given the highest priority, CPU packet transfer requests are given the second highest priority, rate refresh request are given the third highest priority, CPU memory reset operations are given the fourth highest priority and Learn and age operations are given the fifth highest priority by auxiliary arbiter 209. Upon processing the cell data, auxiliary arbiter 209 transmits packet signals to configuration stage 208.

Configuration stage 208 includes a port table for holding all major port specific fields that are required for switching, wherein one entry is associated with each port. The configuration stage 208 also includes several registers. When the configuration stage 208 obtains information from arbiter 206, the configuration stage 208 sets up the inputs for the port table during a first cycle and multiplexes outputs for other port specific registers during a second cycle. At the end of the second cycle, configuration stage 208 sends output to parser stage 210.

Parser stage 210 manages an ingress pipeline buffer which holds the 128-byte cell as lookup requests traverse pipeline 200. When the lookup request reaches the end of pipeline 200, the data is pulled from the ingress pipeline buffer and sent to MMU 104. If the packet is received on a high speed port, a 96-bit module header accompanying the packet is parsed by parser stage 210. After all fields have been parsed, parser stage 210 writes the incoming cell data to the ingress pipeline buffer and passes a write pointer down the pipeline. Since the packet data is written to the ingress pipeline buffer, the packet data need not be transmitted further and the parsed module header information may be dropped. Discard stage 212 then looks for various early discard conditions and, if one or more of these conditions are present, discard stage drops the packet and/or prevents it from being sent through the chip.

Switching stage 213 performs address resolution processing and other switching on incoming packets. According to an embodiment of the invention, switching stage 213 includes a first switch stage 214 and a second switch stage 216. First switch stage 214 resolves any drop conditions, performs BPDU processing, checks for layer 2 source station movement and resolves most of the destination processing for layer 2 and layer 3 unicast packets, layer 3 multicast packets and IP multicast packets. The first switch stage 214 also performs protocol packet control switching by optionally copying different types of protocol packets to the CPU or dropping them. The first switch stage 214 further performs all source address checks and determines if the layer 2 entry needs to get learned or re-learned for station movement cases. The first switch stage 214 further performs destination calls to determine how to switch packet based on a destination switching information. Specifically, the first switch stage 214 figures out the destination port for unicast packets or port bitmap of multicast packets, calculates a new priority, optionally traps packets to the CPU and drops packets for various error conditions. The first switch stage 214 further handles high speed switch processing separate from switch processing from port 109a-109i and switches the incoming high speed packet based on the stage header operation code.

The second switch stage 216 then performs Field Processor (FP) action resolution, source port removal, trunk resolution, high speed trunking, port blocking, CPU priority processing, end-to-end Head of Line (HOL) resource check, resource check, mirroring and maximum transfer length (MTU) checks for verifying that the size of incoming/outgoing packets is below a maximum transfer length. The second switch stage 216 takes first switch stage 216 switching decision, any layer routing information and FP redirection to produce a final destination for switching. The second switch stage 216 also removes the source port from the destination port bitmap and performs trunk resolution processing for resolving the trunking for the destination port for unicast packets, the ingress mirror-to-port and the egress mirror-to-port. The second switch stage 216 also performs high speed trunking by checking if the source port is part of a high speed trunk group and, if it is, removing all ports of the source high speed trunk group. The second switch stage 216 further performs port blocking by performing masking for a variety of reasons, including meshing and egress masking.

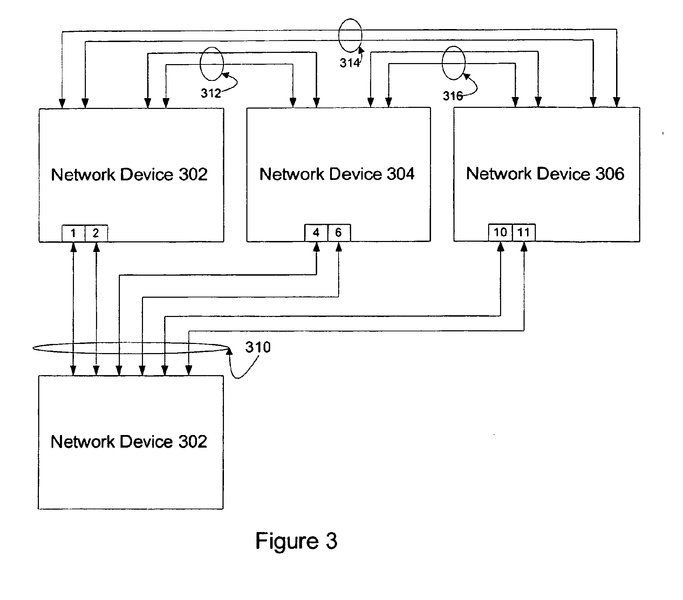

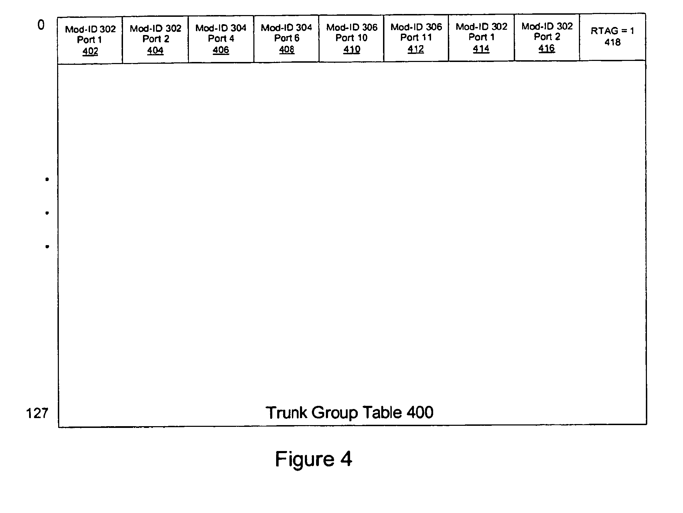

Figure 3 illustrates an embodiment of a network in which multiple network devices, as described above, are connected by trunks. According to figure 3, network 300 includes devices 302-308 which are connected by trunks 310-316. Device 302 includes ports 1 and 2 in trunk group 310, device 304 includes ports 4 and 6 in trunk group 310 and device 306 includes ports 10 and 11 in trunk group 310. Each of network devices 302-308 may receive unicast or multicast packets that must be transmitted to an appropriate destination port. As is known to those skilled in the art, in the case of unicast packets, the destination port is a known port. To send a unicast packet to an appropriate port in a destination trunk, each of network devices 302-308 includes a trunk group table 400, illustrated in figure 4.

As noted above, each of devices 302-307 may support up to 128 trunk ports with up to 8 members per trunk port. As such, table 400 is a 128 entry table, wherein each entry includes fields for eight ports. Therefore, returning to figure 3, for trunk group 310, an associated entry in table 400 is entry 0 which includes a field for each module and port in that trunk group. As such, entry 0 of table 400 includes in field 402, module ID 302 and port ID 1, in field 404, module ID 302 and port ID 2, in field 406, module ID 304 and port ID 4, in field 408, module ID 304 and port ID 6, in field 410, module ID 306 and port ID 10 and in field 412, module ID 306 and port ID 11. Since trunk group 310 only has six ports, the last two fields 414 and 416 in entry 0 may include redundant information from any of fields 402-412 of that entry. Table 400 also includes an R-TAG value in each entry. In an embodiment of the invention, the RTAG value may be one of six options, wherein each option is used to identify predefined fields and certain bits are selected from each field. Thereafter, all of the values from each of the predefined fields are XORed to obtain a number between 0 and 7, wherein a port associated with the obtained number is selected from the trunk group to transmit the packet to a destination device. Different RTAGs are used to obtain different types of distribution. Since the distribution is dependent on the packet, the RTAG enables the device to spread packet distribution over all the ports in a given trunk group.

In one embodiment of the invention, if the RTAG value is set to 1, the port is selected based on the source address (SA), the VLAN, the EtherType, the source module ID (SRC_MODID) and the source port (SRC_PORT) of the packet. If the RTAG value is set to 2, the port is selected based on the destination address (DA), the VLAN, the EtherType, the source module ID and the source port of the packet. If the RTAG value is set to 3, the port is selected based on the source address, the destination address, the VLAN, the EtherType, the source module ID and the source port of the packet. RTAGs 4, 5 and 6 provide a layer 3 header option. If the RTAG value is set to 4, the port is selected based on the source IP address (SIP) and the TCP source port (TCP_SPORT). If the RTAG value is set to 5, the port is selected based on the destination IP address (DIP) and the TCP destination port (TDP_DPORT). If the RTAG value is set to 6, the port is selected based on a value obtained from XORing an RTAG 4 hash and an RTAG 5 hash.

Specifically, in this embodiment, since each entry of trunk group table includes eight fields that are associated with trunk group ports, three bits are selected from each byte of the fields in the RTAG hash to represent 8 bits. So if the RTAG value is 1, SA[0:2], SA[8:10], SA[16:18], SA[32:34] and SA[40:42], VLAN[0:2], VLAN [8:10], EtherType[0:2], EtherType[8:10], SRC_MODID[0:2] and SRC_PORT[0:2] are XORed to obtain a three bit value that is used to index trunk group table 400. If the RTAG value is 2, DA[0:2], DA[8:10], DA[16:18], DA[32:34], SA[40:42], VLAN[0:2], VLAN [8:10], EtherType[0:2], EtherType[8:10], SRC_MODID[0:2] and SRC_PORT[0:2] are XORed to obtain a three bit value that is used to index trunk group table 400. If the RTAG value is 3, SA[0:2], SA[8:10], SA[16:18], SA[32:34], SA[40:42], DA[0:2], DA[8:10], DA[16:18], DA[32:34], DA[40:42], VLAN[0:2], VLAN [8:10], EtherType[0:2], EtherType[8:10], SRC_MODID[0:2] and SRC_PORT[0:2] are XORed to obtain a three bit value that is used to index trunk group table 400.

If the RTAG value is 4, SIP[0:2], SIP[8:10], SIP[16:18], SIP[32:34], SIP[40:42], SIP[48:50], SIP[56:58], SIP[66:64], SIP[72:74], SIP[80:82], SIP[88:90], SIP[96:98], SIP[104:106], SIP[112:114], SIP[120:122], TCP_SPORT[0:2] and TCP_SPORT[8:10] are XORed to obtain a three bit value that is used to index trunk group table 400. If the RTAG value is 5, DIP[0:2], DIP[8:10], DIP[16:18], DIP[32:34], DIP[40:42], DIP[48:50], DIP[56:58], DIP[66:64], DIP[72:74], DIP[80:82], DIP[88:90], DIP[96:98], DIP[104:106], DIP[112:114], DIP[120:122], TCP_DPORT[0:2] and TCP_SPORT[8:10] are XORed to obtain a three bit value that is used to index trunk group table 400.

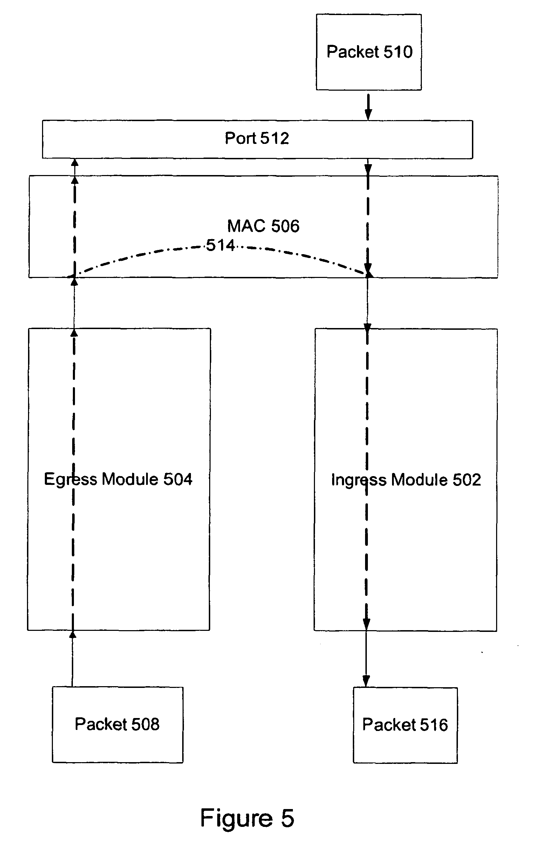

Figure 5 illustrates an embodiment of a network device 500 in which an inventive failover mechanism is implemented. According to figure 5, network device 500 includes an ingress module 502, an egress module 504 and a MAC component 506 associated with a port 512. During normal operations, packet 508 is transmitted out of device 500 via port 512 and packet 510 enters device 500 via port 512. Since an embodiment of device 500 may support up to 128 trunk ports with up to 8 members per trunk port, each port in a trunk may use one or more of the other seven ports in the trunk as backup ports. In such cases, traffic to a failed port is load balanced across all backup ports. As such, when a packet is sent to a set of failover backup ports, a hashing mechanism is used to select a member from the set as the physical backup port.

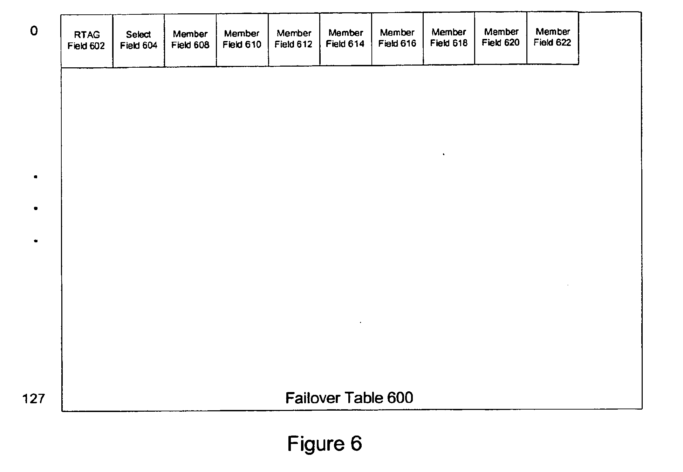

In an embodiment, for each port a failover table 600, as shown in figure 6, specifies the set of failover backup ports and one failover RTAG. The failover RTAG is used to select a hash function, wherein a hash value is computed based on the selected hash function and the hash value is used to select a backup port from the set of failover backup ports. Failover table 600 includes a failover RTAG field 602, a hash select field 604 and multiple member fields 608-622. Failover RTAG field 602 is a 3 bit field for selecting one of the 8 RTAGs to compute the hash value for the packet destined to the failed port. This field selects the hash function and the output of the selected hash function is used to select the backup port. Hash select field 604 is used to select 3 bits from a 20-bit hash value. Member field 608 is a 13-bit field with the global port identifier for a member from the set of failover backup ports associated with the RTAG value of zero; member field 610 is a 13-bit field with the global port identifier for a member from the set of failover backup ports associated with the RTAG value of one; member field 612 is a 13-bit field with the global port identifier for a member from the set of failover backup ports associated with the RTAG value of two; member field 614 is a 13-bit field with the global port identifier for a member from the set of failover backup ports associated with the RTAG value of three; member field 616 is a 13-bit field with the global port identifier for a member from the set of failover backup ports associated with the RTAG value of four; member field 618 is a 13-bit field with the global port identifier for a member from the set of failover backup ports associated with the RTAG value of five; member field 620 is a 13-bit field with the global port identifier for a member from the set of failover backup ports associated with the RTAG value of six; and member field 622 is a 13-bit field with the global port identifier for a member from the set of failover backup ports associated with the RTAG value of seven.

In an embodiment of the invention, table 600 is fully configurable by software. So if, in one example, there is only one backup port in the set of failover backup ports, the software can program the global port identifier in all eight entries 608-622 so that all traffic goes to that backup port. If, in another example, there are three backup ports A, B and C, in the set of failover backup ports, the software may program members 608-612 to port A, members 614-618 to port B and members 620 and 622 to port C. As such traffic from the failover port will be distributed in the 3:3:2 ratio.

Packets being sent to a given port, for example port 512 could be "mirrored" to another port. Device 500 supports different types of mirroring, including ingress mirroring, egress mirroring, MAC-based (i.e. address-based) mirroring and Fast Filter Processor (FFP) mirroring. Ingress mirrored packets are sent as unmodified packets and egress mirrored packets are always sent modified with a VLAN tag, subject to certain limitations. If the packet is ingress mirrored, two copies of the packet is sent to the mirror-to-ports, the unmodified packet to the ingress mirror-to-port and the modified packet to the egress mirror-to-port.

The fact that a port and its set of failover backup ports may be connected to different network devices means that failover cannot be performed using a local link-level mechanism because the failover port may be on a remote device. However, for remote ports, failover cannot be performed in an ingress device because the ingress device does not have the instantaneous state of remote links. Therefore, in an embodiment of the invention, as illustrated in figure 5, if failover occurs at port 512, MAC 506 of port 512 is set in a local loopback mode 514, wherein MAC 506 sends outgoing packets to failed port 512 back to the ingress 502 of that port. Ingress 502 of failed port 512 operates in a mode where all packets to failed port 512 are ingress-mirrored at failed port 512 to a dynamically selected member of the set failover backup ports and the original switched copies of the packets are dropped.

So when the failure occurs at port 512, device 500 sets MAC 506 to local loopback mode 514. When packet 508 is transmitted to port 512, packet 508 comes back to ingress module 502 of port 512 via local MAC loopback 514. The ingress pipeline in device 500 is configured to operate in the failover mode, wherein packet 508 from failed destination port 512 is mirrored and the mirrored copy 516 is sent to one of the ports in the set of failover backup ports based on table 600. An original switched copy of packet 508 is marked to be discarded. As such, the redirected packet is an ingress mirrored packet and thus always a mirror-only unicast packet.

Each port in an embodiment of the invention operates in a disabled state, a forwarding state or a redirecting state. In the disabled state, no traffic is transmitted to and from the port. Once a port is placed in the forwarding state, traffic is transmitted to and received from the port. If a status link indicates that the primary link of the port is not functioning, hardware failover mechanism in device 500 automatically changes the port to the redirecting state, wherein traffic to the failed port is directed to a failover port from the set of failover backup ports. When the primary link of the port becomes functional, software associated with the hardware is notified and may thereafter put the port in the forwarding state. In an embodiment of the invention, device 500 places all ports in a normal forwarding state, after software initiation, by default. In this embodiment, the only state transition affected by the hardware is transition from the forwarding state to the redirecting state and this transition is triggered by malfunctioning of the primary link of the port. All other state transitions are performed by software.

As stated above, when a port fails, packets to the failed port are re-directed to a backup port. However, the backup port may also fail and packets may be redirected again to another port, thereby causing a loop. For example, two ports in a trunk may be redirected to each other and if both ports fail, packets may bounce between the ports. To prevent potential looping, loop-back packets are marked as "redirected" to indicate that the packet has already been redirected and should not be further redirected to another port. In an embodiment of the invention, a bit is set in the high speed header when the packet is marked as redirected. As such, when a port is operating in a redirect state, any packets entering the port that are marked as redirected will be dropped during en-queuing. This prevents a packet that is to be dropped from being queued by the redirected port. When a port enters the redirecting state, some packets that are marked as redirected may already be queued for that port. To prevent these packets from being redirected again, the packets are checked during de-queuing and dropped if marked as redirected.

As such, returning to figure 5, when there is a failure at port 512, MAC loop-back 514 is activated. Thereafter, when packet 508 enters device 500, packet 508 is looped back if packet 508 is not marked as redirected. Looped back packet 508 is then marked as an ingress mirrored packet in the ingress pipeline of port 512 and the set of failover backup ports are retrieved from table 600. Mirrored copy 516 of packet 508 is then marked as redirected and switched copy of the packet is discarded.

By performing redirection at MAC level 506, the present invention ensures that packets always queued in the egress pipeline are preserved and set to the failover port rather than being discarded. Since the failover copy is an ingress mirrored copy of the original packet, the present invention also ensures that the failover copy is not modified by the packet processing logic when it is directed to the set of failover backup ports. Furthermore, all packet modifications are performed at the egress of the failed port rather than the egress of the member of the set of failover backup ports so any port properties are preserved.

The above-discussed configuration of the invention is, in a preferred embodiment, embodied on a semiconductor substrate, such as silicon, with appropriate semiconductor manufacturing techniques and based upon a circuit layout which would, based upon the embodiments discussed above, be apparent to those skilled in the art. A person of skill in the art with respect to semiconductor design and manufacturing would be able to implement the various modules, interfaces, and tables, buffers, etc. of the present invention onto a single semiconductor substrate, based upon the architectural description discussed above. It would also be within the scope of the invention to implement the disclosed elements of the invention in discrete electronic components, thereby taking advantage of the functional aspects of the invention without maximizing the advantages through the use of a single semiconductor substrate.

With respect to the present invention, network devices may be any device that utilizes network data, and can include switches, routers, bridges, gateways or servers. In addition, while the above discussion specifically mentions the handling of packets, packets, in the context of the instant application, can include any sort of datagrams, data packets and cells, or any type of data exchanged between network devices.

## Claims

1. A network device (302, 304, 306, 308) for selecting a failover port from a trunk group (310, 312, 314, 316), the network device (302, 304, 306, 308) comprising:
at least one trunk group (310, 312, 314, 316) comprising a plurality of physical ports (1, 2, 4, 6, 10, 11, 512) wherein the network device (302, 304, 306, 308) is connected to at least one other network device (302, 304, 306, 308) by at least one of the plurality of physical ports (1, 2, 4, 6, 10, 11, 512);
a medium component (506) associated with one port (512) of the plurality of physical ports (1, 2, 4, 6, 10, 11, 512) for setting the port (512) to a predefined mode (514) when there is a failure at the port (512), for changing a state associated with the port (512) after a failure at the port (512) and for forwarding an incoming packet to the associated failed port (512) to an ingress module;
retrieving means for retrieving a set of backup ports from a table (600);
hashing means for selecting one backup port from the set of backup ports; and
processing means for mirroring the incoming packet, for marking a mirrored copy of the packet and for redirecting a marked mirrored packet to the selected backup port, and **characterized by**
the medium component is adapted to forward an incoming packet to the associated failed port (512) to an ingress module,
wherein the redirected packet is marked as redirected to indicate that the packet has already been redirected and should not further be redirected.

2. The network device (302, 304, 306, 308) according to claim 1, wherein the hashing means comprises a load balancing means for distributing incoming packets across the set of backup ports, wherein the set of backup ports comprise other ports in the trunk group (310,312, 314,316).

3. The network device (302, 304, 306, 308) according to claim 1, wherein the table comprises a plurality of entries, wherein each entry is associated with one trunk group (310, 312, 314, 316) and comprises a plurality of fields that are associated with ports (1, 2, 4, 6, 10, 11, 512) in the trunk group (310, 312, 314, 316), wherein each entry comprises a hash field that is used to select bits from predefined fields of the incoming packet to obtain an index bit for accessing one of the plurality of fields and a select field for selecting predefined bits from the hash value.

4. The network device (302, 304, 306; 308) according to claim 1, wherein software associated with the network device (302, 304, 306, 308) comprises configuring means for dynamically configuring the plurality of fields.

5. The network device (302, 304, 306, 308) according to claim 1, wherein the ingress module comprises an ingress pipeline that is configured to operate in a failover mode, wherein the packet from the associated failed port (512) is mirrored and marked and the mirrored copy is sent to the backup port.

6. The network device (302, 304, 306, 308) according to claim 5, wherein the ingress module comprises means for dropping a switched copy of the packet in the ingress pipeline.

7. A method for selecting a failover port (512) from a trunk group (310, 312, 314, 316), the method comprises the steps of:
connecting a network device (302, 304, 306, 308) to at least one other network device (302, 304, 306, 308) by at least one trunk group (310, 312, 314, 316) comprising a plurality of physical ports (1,2,4, 6, 10, 11, 512);
setting at least one port (512) of the plurality of physical ports (1, 2, 4, 6, 10, 11, 512) to a predefined mode when there is a failure at the port (512) and changing a state associated with the port (512);
forwarding an incoming packet to the port (512) to an ingress module;
retrieving a set of backup ports from a table;
selecting one backup port from the set of backup ports;
mirroring the incoming packet;
marking a mirrored copy of the packet as redirected to indicate that the packet has already been redirected and should not further be redirected; and
redirecting a marked mirrored packet to the selected backup port.

8. The method according to claim 7, further comprising distributing incoming packets across the set of backup ports, wherein the set of backup ports comprise other port from the plurality of physical ports(1, 2, 4, 6, 10, 11, 512) of the trunk group (310, 312, 314, 316).

9. The method according to claim 7, further comprising:
storing a plurality of entries in a table, wherein each entry is associated with one trunk group (310, 312, 314, 316) and comprises a plurality of fields that are associated with ports (1, 2, 4, 6, 10, 11, 512) in the trunk group (310, 312, 314, 316) and each entry comprises a hash field;
selecting, with the hash field, bits from predefined fields of the incoming packet to obtain an index bit for accessing one of the plurality of fields; and
selecting, with a select field, predefined bits from the hash value.

## Patentansprüche

1. Netzwerkvorrichtung (302, 304, 306, 308) zum Auswählen eines Ausfallsicherungs-Ports aus einer Trunk-Gruppe (310, 312, 314, 316), wobei die Netzwerkvorrichtung (302, 304, 306, 308) aufweist:
wenigstens eine Trunk-Gruppe (310, 312, 314, 316), die eine Vielzahl physikalischer Ports (1, 2, 4, 6, 10, 11, 512) aufweist, wobei die Netzwerkvorrichtung (302, 304, 306, 308) mit wenigstens einer anderen Netzwerkvorrichtung (302, 304, 306, 308) durch wenigstens einen der Vielzahl physikalischer Ports (1, 2, 4, 6, 10, 11, 512) verbunden ist;
eine Mediumkomponente (506), die mit einem Port (512) der Vielzahl physikalischer Ports (1, 2, 4, 6, 10, 11, 512) zum Einstellen des Ports (512) in einen vorgegebenen Modus (514) assoziiert ist, wenn ein Ausfall an dem Port (512) auftritt, zum Ändern des Zustands, der mit dem Port (512) assoziiert ist, nach einem Ausfall des Ports (512), und zum Weiterleiten eines Pakets, das an dem assoziierten ausgefallenen Port (512) ankommt, an ein Eingangsmodul;
eine Abrufeinrichtung zum Abrufen eines Satzes von Backup-Ports aus einer Tabelle (600);
eine Hash-Einrichtung zum Auswählen eines Backup-Ports aus dem Satz von Backup-Ports; und
eine Verarbeitungseinrichtung zum Spiegeln des ankommenden Pakets, zum Markieren einer gespiegelten Kopie des Pakets, und zum Umleiten eines markierten gespiegelten Pakets an den ausgewählten Backup-Port;
**dadurch gekennzeichnet, dass**
die Mediumkomponente so ausgelegt ist, dass sie ein Paket, das an dem assoziierten ausgefallenen Port (512) ankommt, an ein Eingangsmodul weiterleitet,
wobei das umgeleitete Paket als umgeleitet markiert wird, um anzuzeigen, dass das Paket bereits umgeleitet worden ist und nicht noch einmal umgeleitet werden sollte.

2. Netzwerkvorrichtung (302, 304, 306, 308) nach Anspruch 1, wobei die Hash-Einrichtung eine Lastausgleichs-Einrichtung zum Verteilen ankommender Pakete über den Satz von Backup-Ports aufweist, wobei der Satz von Backup-Ports andere Ports in der Trunk-Gruppe (310, 312, 314, 316) enthält.

3. Netzwerkvorrichtung (302, 304, 306, 308) nach Anspruch 1, wobei die Tabelle eine Vielzahl von Einträgen enthält, wobei jeder Eintrag mit einer Trunk-Gruppe (310, 312, 314, 316) assoziiert ist und eine Vielzahl von Feldern aufweist, die mit Ports (1, 2, 4, 6, 10, 11, 512) in der Trunk-Gruppe (310, 312, 314, 316) assoziiert sind, wobei jeder Eintrag ein Hash-Feld enthält, das verwendet wird, um Bits aus vordefinierten Feldern des ankommenden Pakets auszuwählen, um ein Indexbit zum Zugreifen auf eines der Vielzahl von Feldern und ein Auswahlfeld zum Auswählen vordefinierter Bits aus dem Hash-Wert zu erhalten.

4. Netzwerkvorrichtung (302, 304, 306, 308) nach Anspruch 1, wobei Software, die mit der Netzwerkvorrichtung (302, 304, 306, 308) assoziiert ist, eine Konfigurationseinrichtung zum dynamischen Konfigurieren der Vielzahl von Feldern enthält.

5. Netzwerkvorrichtung (302, 304, 306, 308) nach Anspruch 1, wobei das Eingangsmodul eine Eingangs-Pipeline aufweist, die so konfiguriert ist, dass sie in einem Ausfallsicherungsmodus arbeitet, wobei das Paket von dem assoziierten ausgefallenen Port (512) gespiegelt und markiert wird und die gespiegelte Kopie an den Backup-Port gesendet wird.

6. Netzwerkvorrichtung (302, 304, 306, 308) nach Anspruch 5, wobei das Eingangsmodul eine Einrichtung aufweist zum Fallenlassen einer geschalteten Kopie des Pakets in der Eingangs-Pipeline.

7. Verfahren zum Auswählen eines Ausfallsicherungs-Ports (512) aus einer Trunk-Gruppe (310, 312, 314, 316), wobei das Verfahren die folgenden Schritte umfasst:
Verbinden einer Netzwerkvorrichtung (302, 304, 306, 308) mit wenigstens einer anderen Netzwerkvorrichtung (302, 304, 306, 308) durch wenigstens eine Trunk-Gruppe (310, 312, 314, 316), die eine Vielzahl physikalischer Ports (1, 2, 4, 6, 10, 11, 512) aufweist;
Einstellen wenigstens eines Ports (512) der Vielzahl physikalischer Ports (1, 2, 4, 6, 10, 11, 512) in einen vorgegebenen Modus, wenn ein Ausfall an dem Port (512) auftritt, und Ändern des Zustands, der mit dem Port (512) assoziiert ist;
Weiterleiten eines Pakets, das an dem Port (512) ankommt, an ein Eingangsmodul;
Abrufen eines Satzes von Backup-Ports aus einer Tabelle;
Auswählen eines Backup-Ports aus dem Satz von Backup-Ports;
Spiegeln des ankommenden Pakets;
Markieren einer gespiegelten Kopie des Pakets als umgeleitet, um anzuzeigen, dass das Paket bereits umgeleitet worden ist und nicht noch einmal umgeleitet werden sollte; und
Umleiten eines markierten gespiegelten Pakets an den ausgewählten Backup-Port.

8. Verfahren nach Anspruch 7, das des Weiteren das Verteilen ankommender Pakete über den Satz von Backup-Ports umfasst, wobei der Satz von Backup-Ports andere Ports aus der Vielzahl physikalischer Ports (1, 2, 4, 6, 10, 11, 512) der Trunk-Gruppe (310, 312, 314, 316) enthält.

9. Verfahren nach Anspruch 7, das des Weiteren umfasst:
Speichern einer Vielzahl von Einträgen in einer Tabelle, wobei jeder Eintrag mit einer Trunk-Gruppe (310, 312, 314, 316) assoziiert ist und eine Vielzahl von Feldern aufweist, die mit Ports (1, 2, 4, 6, 10, 11, 512) in der Trunk-Gruppe (310, 312, 314, 316) assoziiert sind, und wobei jeder Eintrag ein Hash-Feld enthält;
Auswählen, mit dem Hash-Feld, von Bits aus vordefinierten Feldern des ankommenden Pakets, um ein Indexbit zum Zugreifen auf eines der Vielzahl von Feldern zu erhalten; und
Auswählen, mit einem Auswahl-Feld, von vordefinierten Bits aus dem Hash-Wert.

## Revendications

1. Dispositif de réseau (302, 304, 306, 308) pour sélectionner un port de basculement dans un groupe de lignes réseau (310, 312, 314, 316), le dispositif de réseau (302, 304, 306, 308) comprenant :
au moins un groupe de lignes réseau (310, 312, 314, 316) comprenant une pluralité de ports physiques (1, 2, 4, 6, 10, 11, 512), dans lequel le dispositif de réseau (302, 304, 306, 308) est connecté à au moins un autre dispositif de réseau (302, 304, 306, 308) par au moins l'un de la pluralité de ports physiques (1, 2, 4, 6, 10, 11, 512) ;
un composant de support (506) associé à un port (512) de la pluralité de ports physiques (1, 2, 4, 6, 10, 11, 512) pour régler le port (512) sur un mode prédéfini (514) lorsqu'il y a une défaillance au niveau du port (512), pour changer un état associé au port (512) après une défaillance au niveau du port (512) et pour transférer un paquet entrant au port défaillant associé (512) à un module d'entrée ;
des moyens d'extraction pour extraire un ensemble de ports de secours d'une table (600) ;
des moyens de hachage pour sélectionner un port de secours de l'ensemble de ports de secours ; et
des moyens de traitement pour mettre le paquet entrant en miroir, pour marquer une copie en miroir du paquet et pour rediriger un paquet marqué en miroir vers le port de secours sélectionné, et **caractérisé en ce que**
le composant de support est apte à transférer un paquet entrant au port défaillant associé (512) à un module d'entrée,
dans lequel le paquet redirigé est marqué comme étant redirigé pour indiquer que le paquet a déjà été redirigé et ne doit plus être redirigé.

2. Dispositif de réseau (302, 304, 306, 308) selon la revendication 1, dans lequel les moyens de hachage comprennent des moyens d'équilibrage de charge pour distribuer des paquets entrants à travers l'ensemble de ports de secours, dans lequel l'ensemble de ports de secours comprend d'autres ports dans le groupe de lignes réseau (310, 312, 314, 316).

3. Dispositif de réseau (302, 304, 306, 308) selon la revendication 1, dans lequel la table comprend une pluralité d'entrées, dans lequel chaque entrée est associée à un groupe de lignes réseau (310, 312, 314, 316) et comprend une pluralité de champs qui sont associés à des ports (1, 2, 4, 6, 10, 11, 512) dans le groupe de lignes réseau (310, 312, 314, 316), dans lequel chaque entrée comprend un champ de hachage qui est utilisé pour sélectionner des bits à partir de champs prédéfinis du paquet entrant pour obtenir un bit d'index pour accéder à l'un de la pluralité de champs et un champ de sélection pour sélectionner des bits prédéfinis à partir de la valeur de hachage.

4. Dispositif de réseau (302, 304, 306, 308) selon la revendication 1, dans lequel un logiciel associé au dispositif de réseau (302, 304, 306, 308) comprend des moyens de configuration pour configurer dynamiquement la pluralité de champs.

5. Dispositif de réseau (302, 304, 306, 308) selon la revendication 1, dans lequel le module d'entrée comprend un pipeline d'entrée qui est configuré pour fonctionner dans un mode de basculement, dans lequel le paquet du port défaillant associé (512) est mis en miroir et marqué et la copie en miroir est envoyée au port de secours.

6. Dispositif de réseau (302, 304, 306, 308) selon la revendication 5, dans lequel le module d'entrée comprend des moyens pour laisser une copie commutée du paquet dans le pipeline d'entrée.

7. Procédé pour sélectionner un port de basculement (512) dans un groupe de lignes réseau (310, 312, 314, 316), le procédé comprenant les étapes consistant à :
connecter un dispositif de réseau (302, 304, 306, 308) à au moins un autre dispositif de réseau (302, 304, 306, 308) par au moins un groupe de lignes réseau (310, 312, 314, 316) comprenant une pluralité de ports physiques (1, 2, 4, 6, 10, 11, 512) ;
régler au moins un port (512) de la pluralité de ports physiques (1, 2, 4, 6, 10, 11, 512) sur un mode prédéfini lorsqu'il y a une défaillance au niveau du port (512) et changer un état associé au port (512) ;
transférer un paquet entrant au port (512) à un module d'entrée ;
extraire un ensemble de ports de secours d'une table ;
sélectionner un port de secours de l'ensemble de ports de secours ;
mettre le paquet entrant en miroir ;
marquer une copie en miroir du paquet comme étant redirigée pour indiquer que le paquet a déjà été redirigé et ne doit plus être redirigé ; et
rediriger un paquet marqué en miroir vers le port de secours sélectionné.

8. Procédé selon la revendication 7, comprenant en outre l'étape consistant à distribuer des paquets entrants à travers l'ensemble de ports de secours, dans lequel l'ensemble de ports de secours comprend un autre port de la pluralité de ports physiques (1, 2, 4, 6, 10, 11, 512) du groupe de lignes réseau (310, 312, 314, 316).

9. Procédé selon la revendication 7, comprenant en outre les étapes consistant à :
stocker une pluralité d'entrées dans une table, dans lequel chaque entrée est associée à un groupe de lignes réseau (310, 312, 314, 316) et comprend une pluralité de champs qui sont associés à des ports (1, 2, 4, 6, 10, 11, 512) dans le groupe de lignes réseau (310, 312, 314, 316), et chaque entrée comprend un champ de hachage ;
sélectionner, avec le champ de hachage, des bits à partir de champs prédéfinis du paquet entrant pour obtenir un bit d'index pour accéder à l'un de la pluralité de champs ; et
sélectionner, avec un champ de sélection, des bits prédéfinis à partir de la valeur de hachage.
